# EUROPÄISCHE PATENTSCHRIFT

(11) **EP 3 772 969 B1**
(45) Veröffentlichungstag und Bekanntmachung des Hinweises auf die Patenterteilung: **22.12.2021**
(21) Anmeldenummer: 18734167.2
(22) Anmeldetag: 20.06.2018
(51) Int. Cl.: A22C 21/00

(54) **VORRICHTUNG, VERFAHREN UND ANORDNUNG ZUM ABTRENNEN DER FLÜGELSPITZEN VON GEFLÜGELSCHLACHTKÖRPERN**
DEVICE, METHOD AND SYSTEM TO SEVERE THE WING TIPS FROM POULTRY CARCASSES
DISPOSITIF, PROCÉDÉ ET ENSEMBLE POUR COUPER LES POINTS DES AILES DES CARCASSES DE VOLAILLES

(43) Veröffentlichungstag der Anmeldung: 17.02.2021
(73) Patentinhaber: Linco Food Systems A/S, 8380 Trige (DK)
(72) Erfinder: ZEËN, Jacobus, 6983 GC Doesburg (NL); VEEN, Tim Andries, 6515 BL Nijmegen (NL); POLMAN, Rudi Theodorus Maria, 6981 EG Doesburg (NL)
(74) Vertreter: Stork Bamberger Patentanwälte PartmbB
(86) Internationale Anmeldenummer: PCT/EP2018/066489
(87) Internationale Veröffentlichungsnummer: WO 2019/242857

(56) Entgegenhaltungen:
- EP-A1- 0 709 031
- EP-A1- 3 205 213
- WO-A1-2014/073957
- US-A- 5 188 560
- US-A1- 2008 171 506

## Beschreibung

Die vorliegende Erfindung betrifft eine Vorrichtung und ein Verfahren zum Abtrennen der Flügelspitzen von Geflügelschlachtkörpern. Des Weiteren betrifft die Erfindung eine Anordnung sowie ein Verfahren zum beidseitigen Abtrennen der Flügelspitzen von Geflügelschlachtkörpern.

Derartige Vorrichtungen und Verfahren zum Abtrennen von Flügelteilen sind beispielsweise aus dem Dokument WO 92/07 470 A1 bekannt. Die Flügelteile werden mittels Flügelhaltern, die den Geflügelarm mit seinen Bestandteilen, Geflügeloberarm, Geflügelunterarm und Flügelspitze, in eine Schneidposition verbracht und beidseitig zeitgleich mittels rotierender Messer abgetrennt.

Eine weitere Vorrichtung sowie ein Verfahren zum Flügelschneiden geht aus dem Dokument EP 3 205 213 A1 hervor, bei dem das Abtrennen von Flügeln oder Flügelteilen jeweils nur an einer Seite des Geflügelschlachtkörpers erfolgt. Ein beidseitiges Abtrennen von Flügeln wird im Dokument US 5 188 560 A offenbart.

Die bekannten Vorrichtungen und Verfahren weisen den Nachteil auf, dass aufgrund der Größen- und Anatomievariation der Geflügelschlachtkörper nicht immer eine exakte Schnittführung und Einhaltung einer vorgegebenen Trennposition gewährleistet werden kann, oder aber die dafür erforderlichen Vorrichtungen einen hohen konstruktiven Aufwand mit sich bringen.

Es ist daher Aufgabe der vorliegenden Erfindung, eine Vorrichtung möglichst einfacher konstruktiver Bauart vorzuschlagen, mittels der der Abtrennvorgang der Flügelspitze mit hoher Präzision weitestgehend unabhängig von der Größe der Geflügelschlachtkörper ermöglicht wird.

Diese Aufgabe wird durch die eingangs genannte Vorrichtung dadurch gelöst, dass die erfindungsgemäße Vorrichtung eine zur Förderung von an den Beinen hängenden Geflügelschlachtkörpern entlang einer Förderstrecke in Transportrichtung eingerichtete Hängefördereinrichtung, eine zum Führen von Hals- und Schulterbereich eingerichtete, sich in der Transportrichtung erstreckende, unterhalb der Geflügelschlachtkörper angeordnete Stützführung mit mindestens einer zum Stützen des Hals- und Schulterbereichs der Geflügelschlachtkörper eingerichteten Stützfläche, eine zum Führen von Geflügelunterarm und Flügelspitze des Geflügelschlachtkörpers eingerichtete, seitlich neben der Stützführung angeordnete, Unterarmführung, eine zum Niederhalten des Geflügeloberarms unter Vorspannung eingerichtete, ortsfest angeordnete erste Niederhalteführung, eine der ersten Niederhalteführung in Transportrichtung nachgeordnete zweite Niederhalteführung mit mindestens zwei zum Niederhalten des Geflügeloberarms eingerichteten Führungselementen, wobei die Führungselemente gegen Rückstellkraft ausweichlich bewegbar angeordnet sind, sowie eine zum Abtrennen der Flügelspitze eingerichtete und entlang der Förderstrecke im Bereich der zweiten Niederhalteführung angeordnete Trenneinrichtung umfasst.

Dies bietet den Vorteil, dass der Geflügelarm optimal für die Durchführung eines Trennschnittes mittels der Trenneinrichtung vorpositioniert und ausgerichtet wird, so dass ein Trennschnitt mit hoher Präzision erreicht wird. Durch die ausweichlich bewegbar angeordneten Führungselemente wird unabhängig von der Anatomie und Größe der Geflügelschlachtkörper immer eine optimale Ausricht- und Positionierwirkung erzielt.

Anders ausgedrückt sind die Führungselemente selbstjustierend ausgebildet. Diese passen sich den jeweiligen anatomischen Gegebenheiten der Geflügelschlachtkörper unter Rückstellkrafteinwirkung an und gewährleisten so stets die genannte Ausrichtung des Geflügelarms zur Sicherstellung eines optimalen Trennergebnisses.

Eine zweckmäßige Ausgestaltung der Erfindung ist dadurch gekennzeichnet, dass eines der Führungselemente als ein Vorführungselement zum Niederhalten des Geflügeloberarms im Zulauf zu der Trenneinrichtung ausgebildet ist. So wird auf besonders einfache konstruktive Weise die erforderliche Vorausrichtung und Vorpositionierung des Geflügelarms bewirkt. Im Zulauf der Trenneinrichtung ist eine grobe Vorausrichtung des Geflügelarms ausreichend, da der Geflügelarm sich noch nicht im Wirkbereich der Trenneinrichtung befindet. Die konstruktive Einfachheit des Vorführungselements wirkt sich vorteilhaft auf einen geringen Komplexitätsgrad der erfindungsgemäßen Vorrichtung sowie einer damit verbundenen erhöhten Zuverlässigkeit bei zugleich geringen Anlagenkosten aus.

Eine bevorzugte Weiterbildung der Erfindung zeichnet sich dadurch aus, dass eines der Führungselemente als ein Trennführungselement zum Niederhalten des Geflügeloberarms in einem Wirkbereich der Trenneinrichtung zum Abtrennen der Flügelspitze vom Geflügelunterarm ausgebildet ist. Das Trennführungselement bewirkt eine weitergehende exakte Ausrichtung und Positionierung des Geflügelarms unmittelbar vor bzw. während des Trennschnitts mittels der Trenneinrichtung. Ein weiterer Vorteil besteht darin, dass der Geflügelarm exakt und präzise mittels des Trennführungselements beim Abtrennen der Flügelspitze geführt wird, zugleich aber bereits ein nachrückender Geflügelschlachtkörper mittels des Vorführungselements vorpositioniert und vorausgerichtet wird. Auf diese Weise ist es möglich, den Abstand zwischen zwei mittels der Hängefördereinrichtung geförderten Geflügelschlachtkörpern zu minimieren und so die Gesamtleistung von Vorrichtung und Verfahren zu erhöhen. Die Vorausrichtung mittels des Vorführungselements des nachrückenden Geflügelschlachtkörpers wirkt sich erfindungsgemäß nicht negativ auf die Führung und Ausrichtung des sich gerade in der Trenneinrichtung befindenden Geflügelschlachtkörpers aus, so dass das Abtrennen der Flügelspitzen mit der gewünschten Präzision erfolgt.

Gemäß einer weiter bevorzugten Ausbildung der Erfindung sind die erste Niederhalteführung, die Unterarmführung, das Vorführungselement und das Trennführungselement jeweils zumindest im Wesentlichen L-profilförmig mit jeweils einer Oberarmführungsfläche zum Ausüben einer Führungskraft auf den Geflügeloberarm in Schwerkraftrichtung sowie einer Unterarmführungsfläche zum Ausüben einer Führungskraft auf den Geflügelunterarm senkrecht zu der Schwerkraftrichtung ausgebildet. Auf diese Weise werden sämtliche Teile des Geflügelarms definiert geführt und eine immer gleiche Ausrichtung und Vorpositionierung zur Durchführung eines Präzisionstrennschnittes mittels der Trenneinrichtung erzielt. Zudem wird durch die beim Führen des Geflügelarms zwangsläufig entstehende Reibung zwischen den Teilen des Geflügelarms und den genannten Führungen erreicht, dass der gesamte Geflügelarm gegenüber dem restlichen Geflügelschlachtkörper etwas nachläuft, so dass eine gewünschte Schrägausrichtung des Geflügelarms bewirkt wird, und zwar unabhängig von der Länge des Geflügelarmes, die sich besonders vorteilhaft zur Erhöhung der Schneidpräzision beim Durchführen des Trennschnittes mittels der Trenneinrichtung auswirkt.

Eine weitere zweckmäßige Ausbildung der Erfindung ist dadurch gekennzeichnet, dass das Vorführungselement an einem Schwenkarm angeordnet ist, wobei der Schwenkarm um eine in einem ersten Endbereich oberhalb der ersten Niederhalteführung verlaufende ortsfeste Schwenkachse schwenkbar eingerichtet ist.

Vorteilhafterweise wird so stets sichergestellt, dass der Geflügeloberarm sicher und zwar unabhängig von anatomischen Gegebenheiten des Geflügelschlachtkörpers geführt wird. Die Auslenkung des Schwenkarms stellt sich in Abhängigkeit der Dicke des Geflügeloberarms automatisch selbsttätig ein, so dass unabhängig von der eigentlichen Geflügelanatomie immer eine zuverlässige Führung gewährleistet ist.

Eine bevorzugte Weiterbildung der Erfindung zeichnet sich dadurch aus, dass der Schwenkarm mit dem Vorführungselement unter Bildung eines ersten Schwenkgelenks derart um die ortsfeste Schwenkachse schwenkbar angeordnet ist, dass diese in einer Wartestellung zur Stützführung um einen Neigungswinkel α hin geneigt ausgerichtet ist. Auf diese Weise bildet das Vorführungselement in der Wartestellung eine schräg ausgerichtete Anlauffläche. Je nach Durchmesser des Geflügeloberarms kommt dieser früher oder später mit dem Vorführungselement in Kontakt und lenkt das Vorführungselement mit dem Schwenkarm entsprechend weit beim fortlaufenden Transportvorgang aus. So wird stets eine optimale Vorausrichtung und Vorpositionierung des Geflügelarms erreicht.

Gemäß einer weiteren bevorzugten Ausführungsform weist zur Schwenkwegbegrenzung des ersten Schwenkgelenks das Vorführungselement stirnseitig zur ersten Niederhalteführung hin eine erste Gegenlagefläche auf, die zur Begrenzung des Neigungswinkels α auf eine Maximalneigung eingerichtet ist und mit einer ersten Endstirnfläche der ersten Niederhalteführung in der Wartestellung unter zumindest teilweisem Formschluss in Anlage kommt. Hierdurch ist der Grad der Schrägstellung voreinstellbar eingerichtet. Durch Verwendung verschiedener Vorführungselemente mit entsprechend unterschiedlicher Gegenlageflächengeometrie kann die Maximalneigung optimal an den jeweiligen Produktionsprozess angepasst werden.

Eine zweckmäßige Ausgestaltung der Erfindung ist dadurch gekennzeichnet, dass das Trennführungselement einlaufseitig an einem freien Ende des Schwenkarms um eine schwenkbewegliche Schwenkachse unter Bildung eines zweiten Schwenkgelenks schwenkbar angeordnet ist. Auf diese Weise wird einerseits ein quasi nahtloser Übergang der Führung von dem Vorführungselement auf das Trennführungselement bereitgestellt. Durch die beschriebene mechanische Verkoppelung befinden sich die jeweils wirksamen Führungsflächen vom Vorführungselement und Trennführungselement an der Übergangsstelle auf gleichem Höhenniveau, so dass die Führungskraft auf den Geflügeloberarm unterbrechungsfrei wirkt. Zum anderen ist das Trennführungselement zu einem gewissen Grad mittels des zweiten Schwenkgelenks von dem Vorführungselement entkoppelt.

Gemäß einer vorteilhaften Ausbildung der Erfindung ist das Trennführungselement derart an dem freien Ende des Schwenkarms angeordnet, dass das Trennführungselement in der Wartestellung zumindest im Wesentlichen parallel zu der Stützfläche der Stützführung ausgerichtet ist.

Eine bevorzugte Weiterbildung der Erfindung zeichnet sich dadurch aus, dass das Vorführungselement stirnseitig zu dem Trennführungselement hin eine zweite Endstirnfläche aufweist, die eingerichtet ist, bei einem Erreichen eines vorgegebenen Schwenkwinkels β mit einer einlaufseitigen zweiten Gegenlagefläche des Trennführungselements derart unter zumindest teilweisem Formschluss in Anlage zu kommen, dass das Trennführungselement unter Sperrung des zweiten Schwenkgelenks zusammen mit dem Vorführungselement einen um das erste Schwenkgelenk gemeinsam schwenkbaren Hebelarm bildet. Das Vorführungselement und das Trennführungselement bilden in diesem Zustand einen einzigen Hebelarm, der um die erste ortsfeste Schwenkachse gemeinsam verschwenkt. Aufgrund der Gesamthebelwirkung wird eine deutlich erhöhte Andruckkraft auf den Geflügeloberarm bewirkt und so während des Trennschnittes mittels der Trenneinrichtung eine exakte Positionierung des Geflügelarms sichergestellt.

Die Aufgabe wird auch durch die eingangs genannte Anordnung gelöst, wobei die erfindungsgemäße Anordnung zwei der Vorrichtungen zum Abtrennen der Flügelspitzen von Geflügelschlachtkörpern mit den vorgenannten Merkmalen umfasst, wobei die Vorrichtungen sequentiell hintereinander angeordnet und eine der Vorrichtungen zum Abtrennen der rechten und die jeweils andere der Vorrichtungen zum Abtrennen der linken Flügelspitze ausgebildet sind. Die damit verbundenen Vorteile sind bereits im Zusammenhang mit der erfindungsgemäßen Vorrichtung ausführlich erläutert worden.

Des Weiteren wird die Aufgabe durch das eingangs genannte Verfahren gelöst, das die folgenden Schritte umfasst: Fördern von an den Beinen hängenden Geflügelschlachtkörpern entlang einer Förderstrecke in Transportrichtung mittels einer Hängefördereinrichtung, Führen von Hals- und Schulterbereich mittels einer sich in der Transportrichtung erstreckenden, unterhalb der Geflügelschlachtkörper angeordneten, Stützführung mit mindestens einer zum Stützen des Hals- und Schulterbereichs der Geflügelschlachtkörper eingerichteten Stützfläche, Führen von Geflügelunterarm und Flügelspitze des Geflügelschlachtkörpers mittels einer, seitlich neben der Stützführung angeordnete, Unterarmführung, Niederhalten des Geflügeloberarms unter Vorspannung mittels einer ortsfest angeordneten ersten Niederhalteführung, Niederhalten des Geflügeloberarms mit einer der ersten Niederhalteführung in Transportrichtung nachgeordneten zweiten Niederhalteführung mit mindestens zwei Führungselementen, die gegen Rückstellkraft ausweichlich bewegbar angeordnet sind, sowie Abtrennen der Flügelspitzen mittels einer entlang der Förderstrecke im Bereich der zweiten Niederhalteführung angeordneten Trenneinrichtung.

Zur Vermeidung von Wiederholungen wird im Zusammenhang mit dem erfindungsgemäßen Verfahren auf die bereits im Zusammenhang mit der erfindungsgemäßen Vorrichtung im Detail geschilderten Vorzüge verwiesen. Diese gelten in analoger Weise auch für das im Folgenden angegebene erfindungsgemäße Verfahren.

Eine zweckmäßige Ausgestaltung der Erfindung ist gekennzeichnet durch Vorausrichten des Geflügeloberarms im Zulauf zu der Trenneinrichtung mittels eines der Führungselemente, das als ein Vorführungselement zum Niederhalten des Geflügeloberarms ausgebildet ist.

Gemäß einer weiter bevorzugten Ausbildung der Erfindung wird der Geflügeloberarm in einem Wirkbereich der Trenneinrichtung zum Abtrennen der Flügelspitze vom Geflügelunterarm mittels eines der Führungselemente niedergehalten, das als ein Trennführungselement ausgebildet ist.

Eine bevorzugte Weiterbildung der Erfindung zeichnet sich durch Ausüben einer Führungskraft auf den Geflügeloberarm in Schwerkraftrichtung sowie einer Führungskraft auf den Geflügelunterarm senkrecht zu der Schwerkraftrichtung aus, in dem die Unterarmführung, das Vorführungselement und das Trennführungselement jeweils zumindest im Wesentlichen L-profilförmig mit einer zumindest im Wesentlichen horizontal ausgerichteten Oberarmführungsfläche und einer zumindest im Wesentlichen senkrecht dazu ausgerichteten Unterarmführungsfläche ausgebildet sind.

Eine vorteilhafte Weiterbildung der Erfindung ist gekennzeichnet durch Niederhalten des Geflügeloberarms mittels des Vorführungselements durch schwenkbewegliches Ausweichen des Vorführungselements, das an einem Schwenkarm angeordnet ist, wobei der Schwenkarm um eine in einem ersten Endbereich oberhalb der ersten Niederhalteführung verlaufende ortsfeste Schwenkachse verschwenkt.

Gemäß einer bevorzugten Weiterbildung wird der Schwenkarm mit dem Vorführungselement unter Bildung eines ersten Schwenkgelenks derart um die ortsfeste Schwenkachse geschwenkt, dass diese in einer Wartestellung zur Stützführung um einen Neigungswinkel α hin geneigt ausgerichtet ist.

Vorzugsweise wird der Schwenkweg des ersten Schwenkgelenks begrenzt, in dem das Vorführungselement stirnseitig zur ersten Niederhalteführung hin eine erste Gegenlagefläche aufweist, die zur Begrenzung des Neigungswinkels α auf eine Maximalneigung eingerichtet ist und mit einer ersten Endstirnfläche der ersten Niederhalteführung in der Wartestellung unter zumindest teilweisem Formschluss in Anlage kommt.

Eine bevorzugte Weiterbildung der Erfindung zeichnet sich durch Verschwenken des Trennführungselements um eine schwenkbewegliche Schwenkachse unter Bildung eines zweiten Schwenkgelenks aus, in dem das Trennführungselement einlaufseitig an einem freien Ende des Schwenkarms schwenkbar angeordnet ist.

Weiter bevorzugt ist das Trennführungselement in der Wartestellung zumindest im Wesentlichen parallel zu der Stützfläche der Stützführung ausgerichtet.

Eine weitere zweckmäßige Ausgestaltung der Erfindung ist durch Sperren des zweiten Schwenkgelenks beim Erreichen des vorgegebenen Schwenkwinkels β gekennzeichnet, derart, dass das Trennführungselement zusammen mit dem Vorführungselement einen um das erste Schwenkgelenk gemeinsam schwenkbaren Hebelarm bildet.

Die Aufgabe wird auch durch das eingangs genannte Verfahren zum beidseitigen Abtrennen der Flügelspitzen von Geflügelschlachtkörpern dadurch gelöst, dass das zuvor beschriebene Verfahren zum Abtrennen der Flügelspitzen von Geflügelschlachtkörpern zweimalig in sequentieller Reihenfolge ausgeführt wird, wobei die Verfahrensschritte jeweils zum Abtrennen der rechten und zum Abtrennen der linken Flügelspitze ausgeführt werden.

Weitere bevorzugte oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht der erfindungsgemäßen Vorrichtung,
- Fig. 2: eine Detailansicht der in Fig. 1 gezeigten Vorrichtung,
- Fig. 3: die in Fig. 1 gezeigte Detailansicht aus einer weiteren Perspektive,
- Fig. 4: die in den Fig. 1 bis 3 gezeigte Vorrichtung mit einem Geflügelschlachtkörper,
- Fig. 5 bis 11: jeweils schematische Ansichten der erfindungsgemäßen Vorrichtung beim Durchlauf eines Geflügeloberarmes sowie
- Fig. 12: eine perspektivische Ansicht der erfindungsgemäßen Anordnung.
Anhand der vorgenannten Figuren wird die erfindungsgemäße Vorrichtung sowie das erfindungsgemäße Verfahren beschrieben. Zur Vermeidung von Wiederholungen gelten die gemachten Ausführungen zur Vorrichtung auch für das erfindungsgemäße Verfahren, so dass im Folgenden nur zu ausgewählten Aspekten des erfindungsgemäßen Verfahrens, losgelöst von der erfindungsgemäßen Vorrichtung, Ausführungen gemacht werden.

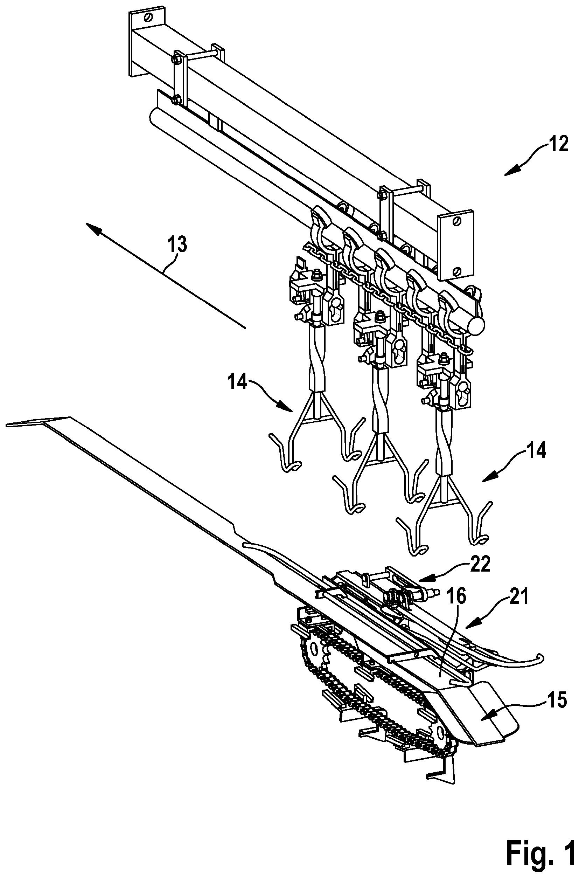

Fig. 1 zeigt eine perspektivische Ansicht der erfindungsgemäßen Vorrichtung zum Abtrennen der - in Fig. 1 nicht gezeigten - Flügelspitzen 20 von Geflügelschlachtkörpern 11. Die Vorrichtung umfasst eine Hängefördereinrichtung 12, die eingerichtet ist, die Geflügelschlachtkörper 11 entlang einer Förderstrecke in Transportrichtung 13 zu fördern. In Fig. 1 sind beispielhaft drei Schäkel 14 dargestellt, mittels derer die Geflügelschlachtkörper 11 kopfüber eingehängt in die Transportrichtung 13, vorzugweise Bauch voraus, gefördert werden.

Hals- und Schulterbereich der Geflügelschlachtkörper 11 werden mittels einer hierzu eingerichteten Stützführung 15 geführt, die unterhalb der Geflügelschlachtkörper 11 bzw. der Schäkel 14 angeordnet ist und sich in die Transportrichtung 13 erstreckt. Die Stützführung 15 weist mindestens eine zum Stützen des Hals- und Schulterbereichs der Geflügelschlachtkörper 11 eingerichteten Stützfläche 16 auf.

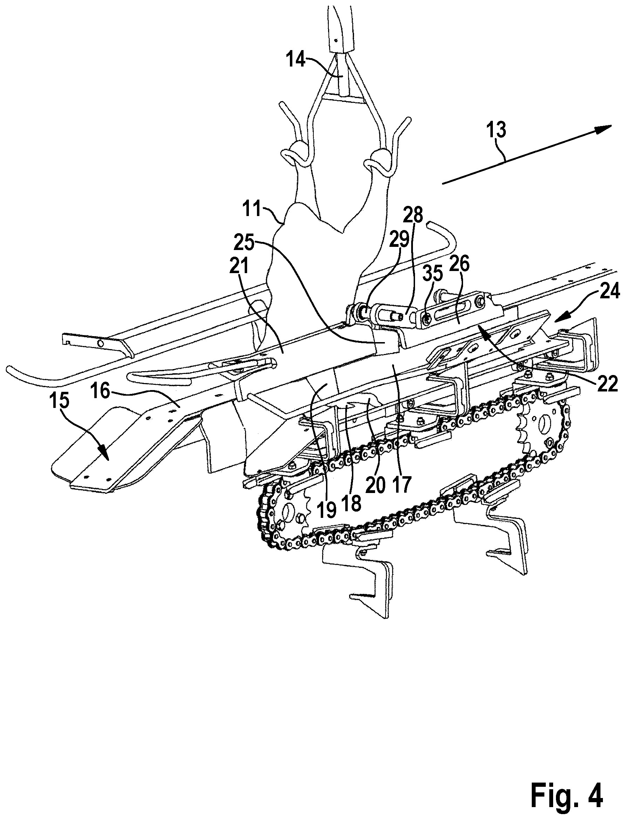

In Fig. 4 ist aus Gründen der besseren Übersicht nur ein Geflügelschlachtkörper 11 exemplarisch gezeigt, der mittels der Hängefördereinrichtung 12 in die Transportrichtung 13 gefördert wird. Wie der Fig. 4 zu entnehmen ist, weist die erfindungsgemäße Vorrichtung eine seitlich neben der Stützführung 15 angeordnete Unterarmführung 17 auf, die zum Führen von Geflügelunterarmen und Flügelspitzen 20 des Geflügelschlachtkörpers 11 eingerichtet ist.

Der Geflügelarm selbst besteht aus einem Geflügeloberarm 19, der auch im Englischen als "upper wing" bezeichnet wird. An den Geflügeloberarm 19 schließt der auch als "mid wing" bezeichnete Geflügelunterarm. An den Geflügelunterarm schließt die Flügelspitze 20, die als "wing tip" bezeichnet wird, an.

Zur Ausrichtung und Positionierung des Geflügelarms umfasst die erfindungsgemäße Vorrichtung eine zum Niederhalten des Geflügeloberarms 19 eingerichtete, ortsfest angeordnete erste Niederhalteführung 21. Die erste Niederhalteführung 21 ist eingerichtet, den Geflügeloberarm 19 unter Vorspannung zu führen. Hierzu kommt die erste Niederhalteführung 21 mit der Unterseite des Geflügeloberarmes 19 des über Kopf hängend geförderten Geflügelschlachtkörpers 11 in Führungskontakt.

Der ersten Niederhalteführung 21 ist in Transportrichtung 13 eine zweite Niederhalteführung 22 nachgeordnet. Die zweite Niederhalteführung 22 umfasst mindestens zwei zum Niederhalten des Geflügeloberarms 19 eingerichtete Führungselemente 23. Die Führungselemente 23 sind jeweils gegen Rückstellkraft ausweichlich bewegbar angeordnet. Mit anderen Worten sind die Führungselemente 23 nicht ortsfest, sondern bewegbar angeordnet. Die Führungselemente 23 sind also derart ausgebildet, dass diese beim Passieren eines der Geflügeloberarme 19 in gewissem Umfang ausweichen können. Die Führungselemente 23 sind ferner derart eingerichtet, dass diese sich selbsttätig in die Ausgangslage zurückstellen und daher auf den Geflügeloberarm 19 eine Führungskraft entgegen der im Geflügelarm aufgrund von Muskel- und Sehnendehnung entstehenden Gegenkraft bewirken.

Die Rückstellkraft wird beispielsweise durch die Eigengewichtskraft der Führungselemente 23 erzeugt. Alternativ sind die Führungselemente 23 federbelastet ausgebildet. Auch eine Kombination aus Eigengewichtskraft und einem Federrückstellelement kann zur Erzeugung der Rückstellkraft herangezogen werden. Optional ist es möglich, an den Führungselementen 23 - in der Zeichnung nicht gezeigte - zusätzliche Gewichtselemente anzuordnen, um die Eigengewichtskraft der Führungselemente 23 entsprechend der gewünschten Rückstellkraft entsprechend den jeweiligen Erfordernissen optimal anzupassen.

Im Bereich der zweiten Niederhalteführung 22 ist eine zum Abtrennen der Flügelspitze 20 eingerichtete Trenneinrichtung 24 vorhanden. Die Trenneinrichtung 24 umfasst beispielsweise zwei Messer, die einen V-förmigen und sich in der Transportrichtung 13 verjüngenden Schneidspalt bilden, in die der zu trennende Bereich zwischen dem Geflügelunterarm und der Flügelspitze 20 einläuft und schließlich die Flügelspitze 20 durch einen Trennschnitt vom Geflügelunterarm abgetrennt wird.

Alternativ können weitere Messeranordnungen zum Einsatz kommen, beispielsweise rotierende Kreismesser und dergleichen.

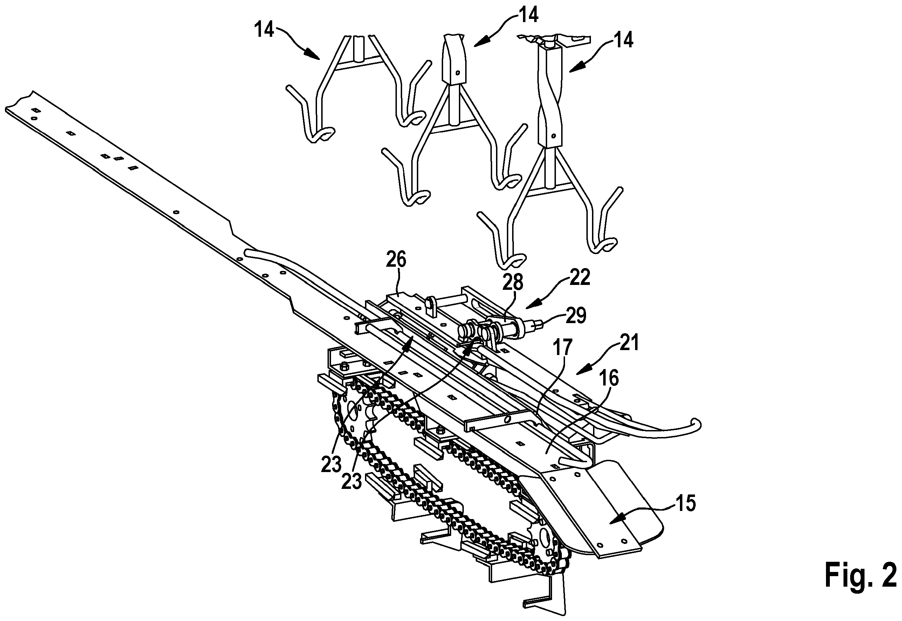

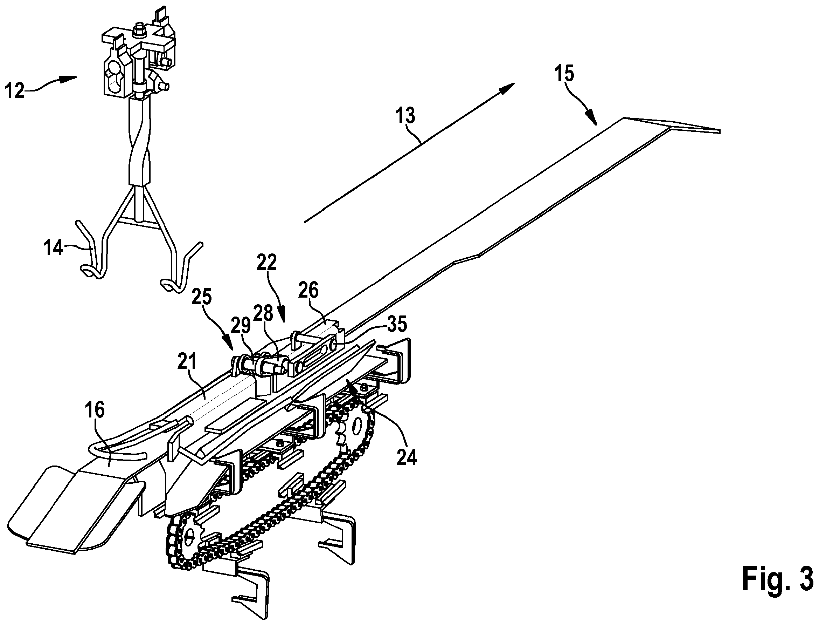

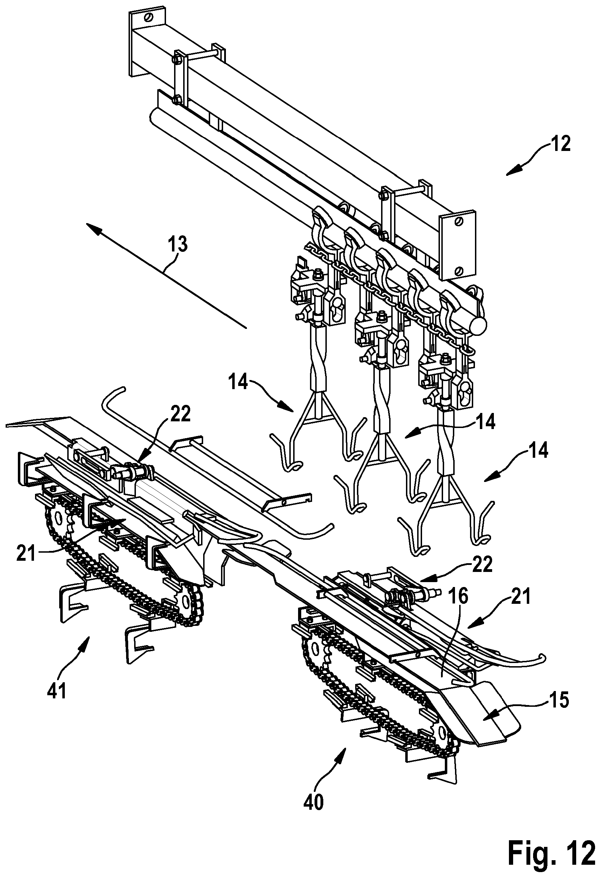

Ergänzend ist die erfindungsgemäße Vorrichtung in den Fig. 2 und 3 jeweils in vergrößerter Darstellung gezeigt. Die in den Fig. 1 bis 4 gezeigte Vorrichtung ist ausgebildet, jeweils mit Blick in die Transportrichtung 13 rechtsseitig die Flügelspitzen 20 abzutrennen, also aus anatomischer Sicht, den linken Flügel abzutrennen. Dies dient nur der besseren Darstellbarkeit. Die erfindungsgemäße Vorrichtung ist jedoch grundsätzlich dazu eingerichtet, sowohl rechts- als auch linksseitig die Flügelspitzen 20 abzutrennen. Vergleiche hierzu auch Fig. 12, in der die an späterer Stelle beschriebene erfindungsgemäße Anordnung dargestellt ist.

Vorzugsweise ist eines der Führungselemente 23 als ein Vorführungselement 25 zum Niederhalten des Geflügeloberarms 19 im Zulauf zu der Trenneinrichtung 24 ausgebildet. Der Zulauf zu der Trenneinrichtung 24 bezeichnet einen Bereich der Förderstrecke, bevor die Teile des Geflügelarms mit der Trenneinrichtung 24 in Eingriff gelangen. Das Vorführungselement 25 ist also zur Vorausrichtung und Vorpositionierung des Geflügelarms eingerichtet, um nachfolgenden Trennvorgang hoher Zuverlässigkeit und Präzision zu gewährleisten.

Weiter bevorzugt ist eines der Führungselemente 23 als ein Trennführungselement 26 zum Niederhalten des Geflügeloberarms 19 in einem Wirkbereich der Trenneinrichtung 24 zum Abtrennen der Flügelspitze 20 vom Geflügelunterarm ausgebildet. Der Wirkbereich der Trenneinrichtung 24 bezeichnet denjenigen Abschnitt der Förderstrecke, der im Bereich der Trenneinrichtung 24 liegt.

Vorzugsweise sind die erste Niederhalteführung 21, die Unterarmführung 17, das Vorführungselement 25 und das Trennführungselement 26 jeweils zumindest im Wesentlichen L-profilförmig ausgebildet. Die genannten Führungen weisen also jeweils eine Oberarmführungsfläche 27 auf, die zum Ausüben einer Führungskraft auf den Geflügeloberarm 19 in Schwerkraftrichtung ausgebildet ist. Zudem weisen die genannten Führungen jeweils eine Unterarmführungsfläche 42 zum Ausüben einer Führungskraft auf den Geflügelunterarm senkrecht zu der Schwerkraftrichtung auf.

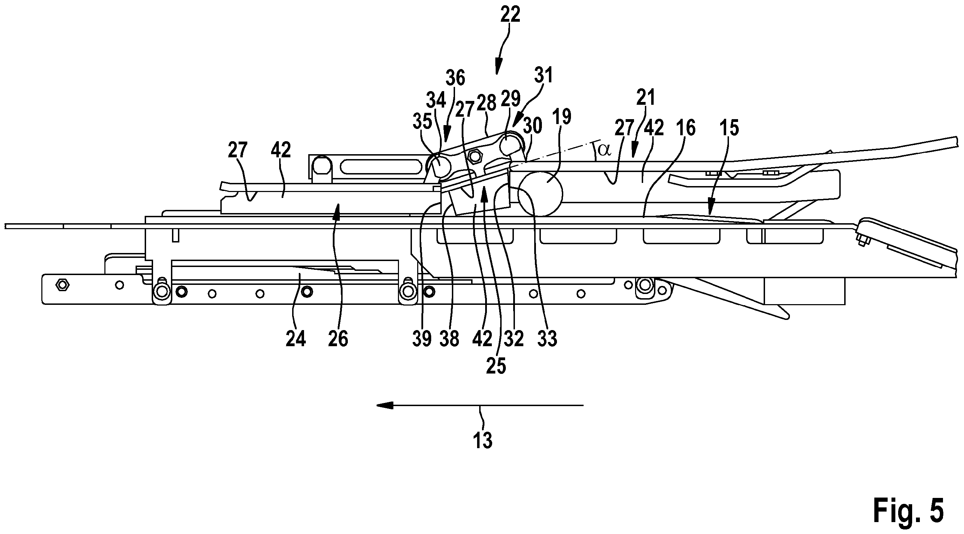

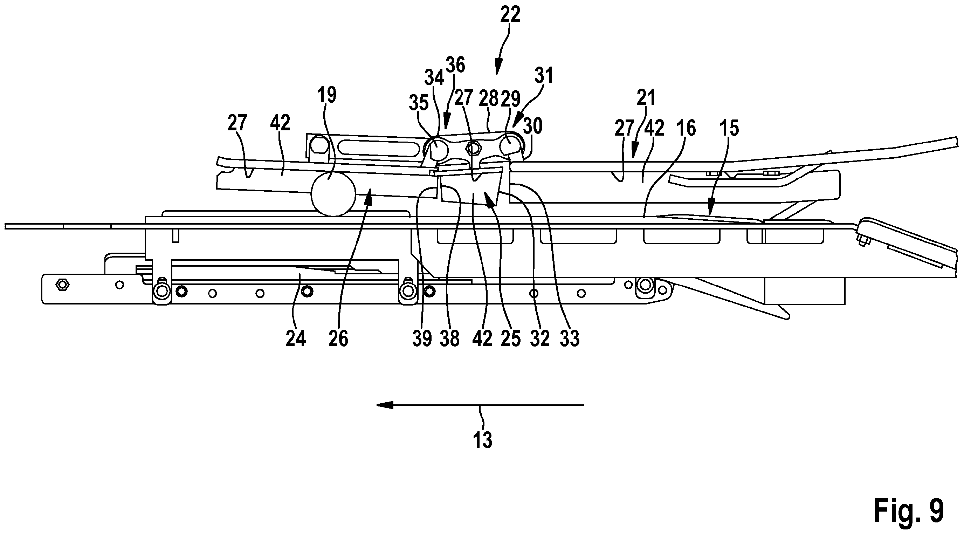

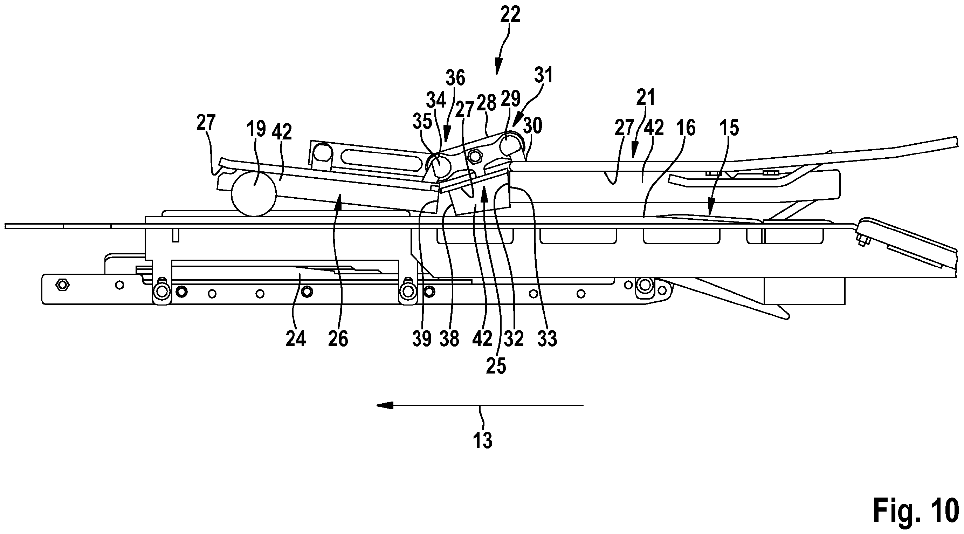

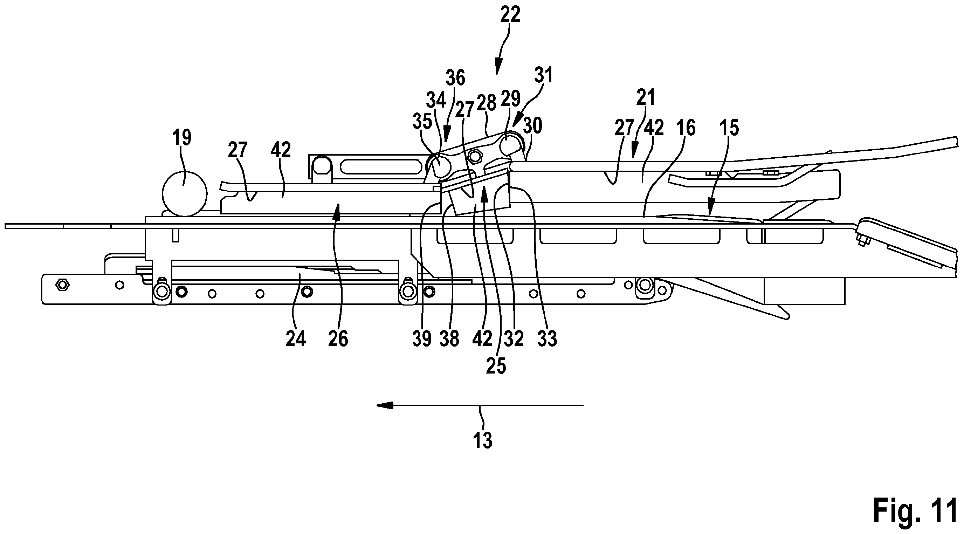

Zur Veranschaulichung der Funktionsweise der erfindungsgemäßen Vorrichtung zeigen die Fig. 5 bis 11 jeweils schematische Ansichten der erfindungsgemäßen Vorrichtung beim Durchlauf des - vereinfacht im Schnitt als Kreis dargestellten - Geflügeloberarmes 19. Aus Gründen der bessern Übersichtlichkeit wurde in den Fig. 5 bis 11 auf eine Darstellung weiterer Teile des Geflügelarms verzichtet.

Vorteilhafterweise ist das Vorführungselement 25 an einem Schwenkarm angeordnet. Der Schwenkarm 28 ist um eine ortsfeste Schwenkachse 29 schwenkbar eingerichtet. Die Schwenkachse 29 ist in einem ersten Endbereich 30 oberhalb der ersten Niederhalteführung 21 verlaufend eingerichtet.

Fig. 5 zeigt eine Momentaufnahme, in der sich der Geflügeloberarm 19 noch im Bereich vor dem Vorführungselement 25 befindet. Der Schwenkarm 28 mit dem Vorführungselement 25 befindet sich in einer Wartestellung und ist unter Bildung eines ersten Schwenkgelenks 31 derart um die ortsfeste Schwenkachse 29 schwenkbar angeordnet, dass diese in der Wartestellung zur Stützführung 15 hin geneigt ausgerichtet sind. Der Schwenkarm 28 und das Vorführungselement 25 sind also derart schwenkbar angeordnet, dass sich diese in der Wartestellung in Schrägstellung um einen Neigungswinkel α befinden.

Vorzugsweise weist das erste Schwenkgelenk 31 Schwenkwegbegrenzungen auf. Hierzu weist das Vorführungselement 25 stirnseitig zur ersten Niederhalteführung 21 hin eine erste Gegenlagefläche 32 auf. Die Gegenlagefläche 32 ist zur Begrenzung des Neigungswinkels α auf eine Maximalneigung eingerichtet, in der diese mit einer ersten Endstirnfläche 33 der ersten Niederhalteführung 21 in der Wartestellung unter zumindest teilweisem Formschluss in Anlage kommt.

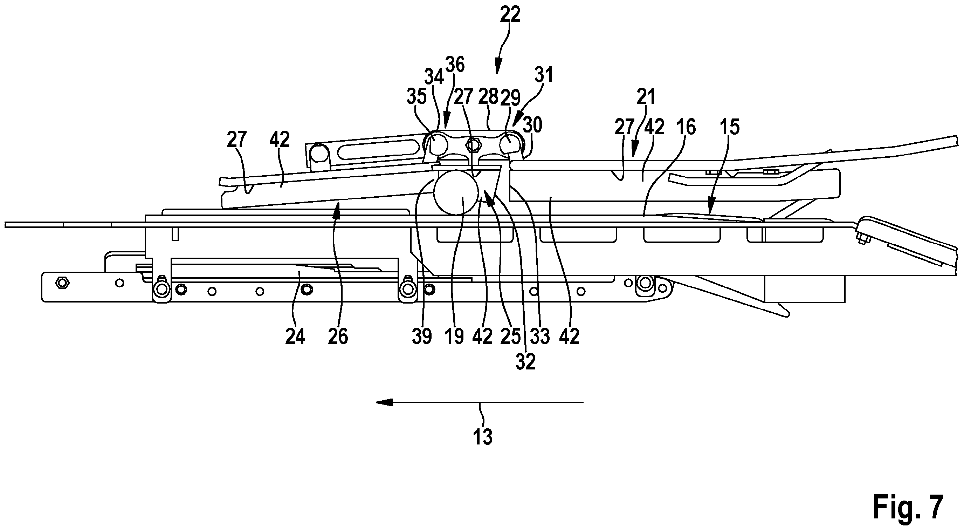

Aus Fig. 7 ist ersichtlich, dass die Gegenlagefläche 32 beispielsweise als Schrägfläche ausgebildet ist, während die erste Endstirnfläche 33 gerade ausgebildet ist. Durch Vorwahl des Neigungswinkels der Gegenlagefläche 32 gegenüber der gerade ausgebildeten ersten Endstirnfläche 33 kann der maximale Neigungswinkel α eingestellt und vorgegeben werden. Vorzugsweise entspricht der Neigungswinkel der Gegenlagefläche 32 gerade der Maximalneigung.

Vorteilhafterweise ist das Trennführungselement 26 einlaufseitig an einem freien Ende 34 des Schwenkarms 28 um eine schwenkbewegliche Schwenkachse 35 unter Bildung eines zweiten Schwenkgelenks 36 schwenkbar angeordnet. Die Schwenkachse 35 ist also nicht ortsfest, sondern verlagert ihre Position auf einem Kreisbogenabschnitt in Abhängigkeit der jeweiligen Stellung des Schwenkarms 28.

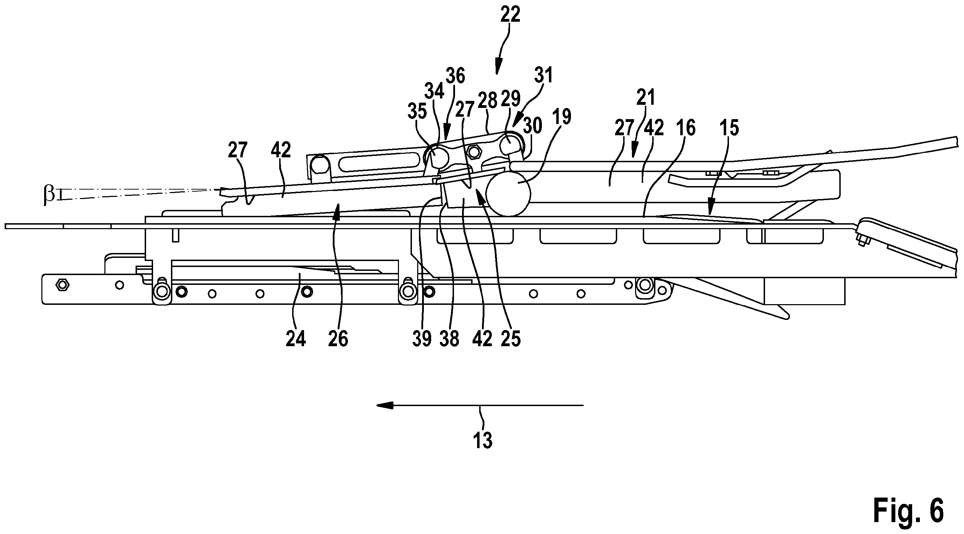

Ein Einlaufen des Geflügeloberarms 19 in einen Einlaufbereich des Vorführungselements 25, wie in Fig. 6 dargestellt, führt also zu einer Schwenkauslenkung des Schwenkarmes 28 mit dem Vorführungselement 25. Hierdurch beschreibt die schwenkbewegliche Schwenkachse 35 eine Aufwärtsbewegung auf einem Kreisbogenabschnitt. Das Trennführungselement 26 führt folglich eine Schwenkbewegung um einen Drehpunkt aus. Dieser Drehpunkt wird durch die Auflage des Trennführungselements 26 auf der Stützfläche oder durch Auflage auf dem Geflügeloberarm 19 gebildet. Folglich ist der Drehpunkt nicht ortsfest, sondern positionsvariabel.

Weiter bevorzugt ist das Trennführungselement 26 derart an dem freien Ende 34 des Schwenkarms 28 angeordnet, dass das Trennführungselement 26 in der in Fig. 5 gezeigten Wartestellung zumindest im Wesentlichen parallel zu der Stützfläche 16 der Stützführung 15, also entweder parallel oder nahezu parallel, ausgerichtet ist.

Vorteilhafterweise weist das Vorführungselement 25 stirnseitig zu dem Trennführungselement 26 hin eine zweite Endstirnfläche 38 auf. Die zweite Endstirnfläche 38 ist eingerichtet, bei einem Erreichen eines vorgegebenen Schwenkwinkel β mit einer einlaufseitigen zweiten Gegenlagefläche 39 des Trennführungselements 26 derart unter zumindest teilweisem Formschluss in Anlage zu kommen, dass das Trennführungselement 26 unter Sperrung des zweiten Schwenkgelenks 36 zusammen mit dem Vorführungselement 25 einen um das erste Schwenkgelenk 31 gemeinsam schwenkbaren Hebelarm bildet.

Anders ausgedrückt sind das Vorführungselement 25 und das Trennführungselement 26 derart miteinander gekoppelt, dass beim Erreichen oder Überschreiten des genannten Schwenkwinkels β eine Zwangskopplung unter Sperrung des zweiten Schwenkgelenks 36 stattfindet. Das Vorführungselement 25 und das Trennführungselement 26 verschwenken dann gemeinsam um die erste ortsfeste Schwenkachse 29.

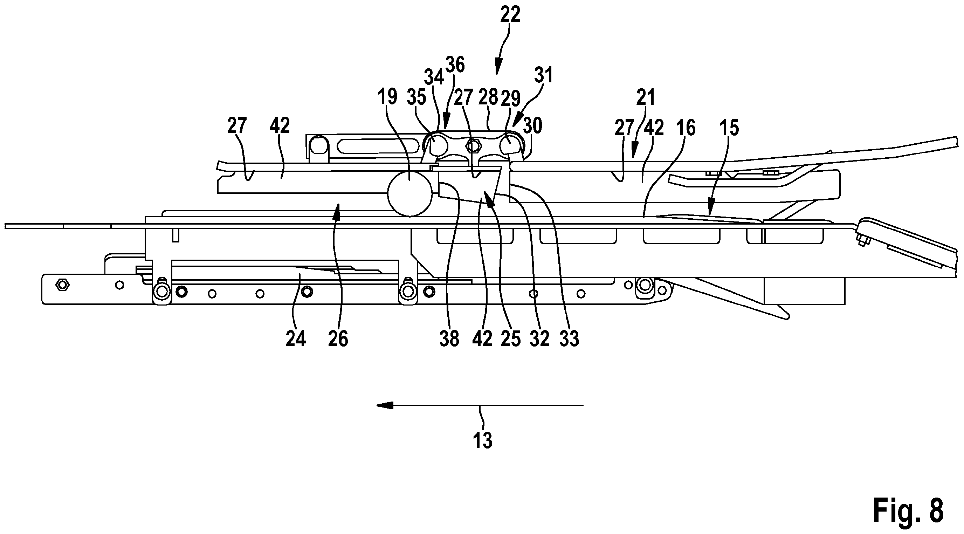

Die sich daraus ergebenden Stellungen des Vorführungselements 25 und des Trennführungselements 26 beim weiteren Transport des Geflügelschlachtkörpers in der Transportrichtung 13 gehen aus den Fig. 8 bis 11 anschaulich hervor.

Die Erfindung wird auch durch die in Fig. 12 gezeigte Anordnung zum beidseitigen Abtrennen der Flügelspitzen 20 der Geflügelschlachtkörper 11 gelöst. Wie Fig. 12 zu entnehmen ist, umfasst die erfindungsgemäße Anordnung zwei Vorrichtungen 40, 41 zum Abtrennen der Flügelspitze 20 von Geflügelschlachtkörpern 11. Die Vorrichtungen 40, 41 umfassen jeweils die zuvor beschriebenen Merkmale. Beide Vorrichtungen 40, 41 sind sequentiell hintereinander angeordnet, wobei die Vorrichtung 40 zum Abtrennen der rechten und die jeweils andere Vorrichtung 41 zum Abtrennen der linken Flügelspitze 20 ausgebildet sind. Die Reihenfolge der Hintereinanderanordnung der beiden Vorrichtungen 40, 41 ist beliebig, so dass das Abtrennen der Flügelspitzen 20 auch in umgekehrter Reihenfolge erfolgen kann.

## Patentansprüche

1. Vorrichtung zum Abtrennen der Flügelspitze (10) von Geflügelschlachtkörpern (11), umfassend
eine zur Förderung von an den Beinen hängenden Geflügelschlachtkörpern (11) entlang einer Förderstrecke in Transportrichtung (13) eingerichtete Hängefördereinrichtung (12),
eine zum Führen von Hals- und Schulterbereich eingerichtete, sich in der Transportrichtung (13) erstreckende, unterhalb der Geflügelschlachtkörper (11) angeordnete Stützführung (15) mit mindestens einer zum Stützen des Hals- und Schulterbereichs der Geflügelschlachtkörper (11) eingerichteten Stützfläche (16),
eine zum Führen von Geflügelunterarm und Flügelspitze (20) des Geflügelschlachtkörpers (11) eingerichtete, seitlich neben der Stützführung (15) angeordnete, Unterarmführung (17),
eine zum Niederhalten des Geflügeloberarms (19) unter Vorspannung eingerichtete, ortsfest angeordnete erste Niederhalteführung (21),
eine der ersten Niederhalteführung (21) in Transportrichtung (13) nachgeordnete zweite Niederhalteführung (22) mit mindestens zwei zum Niederhalten des Geflügeloberarms (19) eingerichteten Führungselementen (23), wobei die Führungselemente (23) gegen Rückstellkraft ausweichlich bewegbar angeordnet sind, sowie
eine zum Abtrennen der Flügelspitze (20) eingerichtete und entlang der Förderstrecke im Bereich der zweiten Niederhalteführung (22) angeordnete Trenneinrichtung (24).

2. Vorrichtung nach Anspruch 1, **dadurch gekennzeichnet, dass** eines der Führungselemente (23) als ein Vorführungselement (25) zum Niederhalten des Geflügeloberarms (19) im Zulauf zu der Trenneinrichtung (24) ausgebildet ist.

3. Vorrichtung nach einem der Ansprüche 1 oder 2, **dadurch gekennzeichnet, dass** eines der Führungselemente (23) als ein Trennführungselement (26) zum Niederhalten des Geflügeloberarms (19) in einem Wirkbereich der Trenneinrichtung (24) zum Abtrennen der Flügelspitze (20) vom Geflügelunterarm ausgebildet ist.

4. Vorrichtung nach einem der Ansprüche 1 bis 3, **dadurch gekennzeichnet, dass** die erste Niederhalteführung (21), die Unterarmführung (17), das Vorführungselement (25) und das Trennführungselement (26) jeweils zumindest im Wesentlichen L-profilförmig mit jeweils einer Oberarmführungsfläche (27) zum Ausüben einer Führungskraft auf den Geflügeloberarm (19) in Schwerkraftrichtung sowie einer Unterarmführungsfläche (42) zum Ausüben einer Führungskraft auf den Geflügelunterarm senkrecht zu der Schwerkraftrichtung ausgebildet sind.

5. Vorrichtung nach einem der Ansprüche 2 bis 4, **dadurch gekennzeichnet, dass** das Vorführungselement (25) an einem Schwenkarm (28) angeordnet ist, wobei der Schwenkarm (28) um eine in einem ersten Endbereich (30) oberhalb der ersten Niederhalteführung (21) verlaufende ortsfeste Schwenkachse (29) schwenkbar eingerichtet ist.

6. Vorrichtung nach Anspruch 5, **dadurch gekennzeichnet, dass** der Schwenkarm (28) mit dem Vorführungselement (25) unter Bildung eines ersten Schwenkgelenks (31) derart um die ortsfeste Schwenkachse (29) schwenkbar angeordnet ist, dass diese in einer Wartestellung zur Stützführung (15) um einen Neigungswinkel α hin geneigt ausgerichtet ist.

7. Vorrichtung nach Anspruch 6, **dadurch gekennzeichnet, dass** zur Schwenkwegbegrenzung des ersten Schwenkgelenks (31) das Vorführungselement (25) stirnseitig zur ersten Niederhalteführung (21) hin eine erste Gegenlagefläche (32) aufweist, die zur Begrenzung des Neigungswinkels α auf eine Maximalneigung eingerichtet ist und mit einer ersten Endstirnfläche (33) der ersten Niederhalteführung (21) in der Wartestellung unter zumindest teilweisem Formschluss in Anlage kommt.

8. Vorrichtung nach einem der Ansprüche 5 bis 7, **dadurch gekennzeichnet, dass** das Trennführungselement (26) einlaufseitig an einem freien Ende des Schwenkarms (28) um eine schwenkbewegliche Schwenkachse (35) unter Bildung eines zweiten Schwenkgelenks (36) schwenkbar angeordnet ist.

9. Vorrichtung nach Anspruch 8, **dadurch gekennzeichnet, dass** das Trennführungselement (26) derart an dem freien Ende (34) des Schwenkarms (28) angeordnet ist, dass das Trennführungselement (26) in der Wartestellung zumindest im Wesentlichen parallel zu der Stützfläche (16) der Stützführung (15) ausgerichtet ist.

10. Vorrichtung nach einem der Ansprüche 8 oder 9, **dadurch gekennzeichnet, dass** das Vorführungselement (25) stirnseitig zu dem Trennführungselement (26) hin eine zweite Endstirnfläche (38) aufweist, die eingerichtet ist, bei einem Erreichen eines vorgegebenen Schwenkwinkels β mit einer einlaufseitigen zweiten Gegenlagefläche (39) des Trennführungselements (26) derart unter zumindest teilweisem Formschluss in Anlage zu kommen, dass das Trennführungselement (26) unter Sperrung des zweiten Schwenkgelenks (36) zusammen mit dem Vorführungselement (25) einen um das erste Schwenkgelenk (31) gemeinsam schwenkbaren Hebelarm bildet.

11. Anordnung zum beidseitigen Abtrennen der Flügelspitze von Geflügelschlachtkörpern (11), umfassend zwei Vorrichtungen (40, 41) zum Abtrennen der Flügelspitzen (10) von Geflügelschlachtkörpern (11) nach einem der Ansprüche 1 bis 10, wobei die Vorrichtungen (40, 41) sequentiell hintereinander angeordnet und eine der Vorrichtungen (40) zum Abtrennen der rechten und die jeweils andere der Vorrichtungen (41) zum Abtrennen der linken Flügelspitze (20) ausgebildet sind.

12. Verfahren zum Abtrennen der Flügelspitze (20) von Geflügelschlachtkörpern (11), umfassend die Schritte:
- Fördern von an den Beinen hängenden Geflügelschlachtkörpern (11) entlang einer Förderstrecke in Transportrichtung (13) mittels einer Hängefördereinrichtung (12),
- Führen von Hals- und Schulterbereich mittels einer sich in der Transportrichtung (13) erstreckenden, unterhalb der Geflügelschlachtkörper (11) angeordneten, Stützführung (15) mit mindestens einer zum Stützen des Hals- und Schulterbereichs der Geflügelschlachtkörper (11) eingerichteten Stützfläche (16),
- Führen von Geflügelunterarm und Flügelspitze (20) des Geflügelschlachtkörpers (11) mittels einer, seitlich neben der Stützführung (15) angeordnete, Unterarmführung (17),
- Niederhalten des Geflügeloberarms (19) unter Vorspannung mittels einer ortsfest angeordneten ersten Niederhalteführung (21),
- Niederhalten des Geflügeloberarms (19) mit einer der ersten Niederhalteführung (21) in Transportrichtung (13) nachgeordneten zweiten Niederhalteführung (22) mit mindestens zwei Führungselementen (23), die gegen Rückstellkraft ausweichlich bewegbar angeordnet sind, sowie
- Abtrennen der Flügelspitze (20) mittels einer entlang der Förderstrecke im Bereich der zweiten Niederhalteführung (22) angeordneten Trenneinrichtung (24).

13. Verfahren nach Anspruch 12, **gekennzeichnet durch** Vorausrichten des Geflügeloberarms (19) im Zulauf zu der Trenneinrichtung (24) mittels eines der Führungselemente (23), das als ein Vorführungselement (25) zum Niederhalten des Geflügeloberarms (19) ausgebildet ist.

14. Verfahren nach einem der Ansprüche 12 oder 13, **gekennzeichnet durch** Niederhalten des Geflügeloberarms (19) in einem Wirkbereich der Trenneinrichtung (24) zum Abtrennen der Flügelspitze (20) vom Geflügelunterarm mittels eines der Führungselemente (23), das als ein Trennführungselement (26) ausgebildet ist.

15. Verfahren nach einem der Ansprüche 12 bis 14, **gekennzeichnet durch** Ausüben einer Führungskraft auf den Geflügeloberarm (19) in Schwerkraftrichtung sowie einer Führungskraft auf den Geflügelunterarm senkrecht zu der Schwerkraftrichtung **dadurch, dass** die Unterarmführung (17), das Vorführungselement (25) und das Trennführungselement (26) jeweils zumindest im Wesentlichen L-profilförmig mit einer zumindest im Wesentlichen horizontal ausgerichteten Oberarmführungsfläche (27) und einer zumindest im Wesentlichen senkrecht dazu ausgerichteten Unterarmführungsfläche (42) ausgebildet sind.

16. Verfahren nach einem der Ansprüche 12 bis 15, **gekennzeichnet durch** Niederhalten des Geflügeloberarms (19) mittels des Vorführungselements (25) durch schwenkbewegliches Ausweichen des Vorführungselements (25), das an einem Schwenkarm (28) angeordnet ist, wobei der Schwenkarm (28) um eine in einem ersten Endbereich (30) oberhalb der ersten Niederhalteführung (21) verlaufende ortsfeste Schwenkachse (29) verschwenkt.

17. Verfahren nach Anspruch 16, **gekennzeichnet dadurch, dass** der Schwenkarm (28) mit dem Vorführungselement (25) unter Bildung eines ersten Schwenkgelenks (31) derart um die ortsfeste Schwenkachse (29) geschwenkt wird, dass diese in einer Wartestellung zur Stützführung (15) um einen Neigungswinkel α hin geneigt ausgerichtet sind.

18. Verfahren nach Anspruch 17, **gekennzeichnet dadurch, dass** der Schwenkweg des ersten Schwenkgelenks (31) begrenzt wird, indem das Vorführungselement (25) stirnseitig zur ersten Niederhalteführung (21) hin eine erste Gegenlagefläche (32) aufweist, die zur Begrenzung des Neigungswinkels α auf eine Maximalneigung eingerichtet ist und mit einer ersten Endstirnfläche (33) der ersten Niederhalteführung (21) in der Wartestellung unter zumindest teilweisem Formschluss in Anlage kommt.

19. Verfahren nach einem der Ansprüche 14 bis 18, **gekennzeichnet durch**, Verschwenken des Trennführungselements (26) um eine schwenkbewegliche Schwenkachse (35) unter Bildung eines zweiten Schwenkgelenks (36), in dem das Trennführungselement (26) einlaufseitig an einem freien Ende (34) des Schwenkarms (28) schwenkbar angeordnet ist.

20. Verfahren nach Anspruch 19, **dadurch gekennzeichnet, dass** das Trennführungselement (26) in der Wartestellung zumindest im Wesentlichen parallel zu der Stützfläche (16) der Stützführung (15) ausgerichtet ist.

21. Verfahren nach einem der Ansprüche 19 oder 20, **gekennzeichnet durch** Sperren des zweiten Schwenkgelenks (36) beim Erreichen des vorgegebenen Schwenkwinkels β derart, dass das Trennführungselement (26) zusammen mit dem Vorführungselement (25) einen um das erste Schwenkgelenk (31) gemeinsam schwenkbaren Hebelarm bildet.

22. Verfahren zum beidseitigen Abtrennen der Flügelspitze (20) von Geflügelschlachtkörpern (11) durch zweimaliges Ausführen des Verfahrens zum Abtrennen der Flügelspitze (20) von Geflügelschlachtkörpern (11) nach einem der Ansprüche 12 bis 21, wobei die Verfahrensschritte jeweils zum Abtrennen der rechten und zum Abtrennen der linken Flügelspitze (20) ausgeführt werden.

## Claims

1. Apparatus for separating wing tips (10) from poultry carcasses (11), comprising:
a suspended conveyor device (12) which is configured to convey poultry carcasses (11) suspended from the legs along a conveyor line in the transport direction (13);
a support guide (15) which is configured for guiding the neck and shoulder region, extends in the transport direction (13) and is arranged below the poultry carcass (11), and has at least one support surface (16) configured to support the neck and shoulder region of the poultry carcass (11);
a lower arm guide (17) which is configured for guiding the poultry lower arm and wing tip (20) of the poultry carcass (11) and is arranged at the side of the support guide (15);
a first hold-down guide (21) which is configured for holding down the poultry upper arm (19) under pretension and is arranged stationarily;
a second hold-down guide (22) which is arranged downstream of the first hold-down guide (21) in the transport direction (13) and has at least two guiding elements (23) configured for holding down the poultry upper arm (19), wherein the guiding elements (23) are arranged so as to be movable in deflection against a return force; and
a separating device (24) which is configured for separating the wing tip (20) and is arranged along the conveyor line in the region of the second hold-down guide (22).

2. Apparatus according to claim 1, **characterised in that** one of the guiding elements (23) is formed as a pre-guiding element (25) for holding down the poultry upper arm (19) at the inlet to the separating device (24).

3. Apparatus according to one of claims 1 or 2, **characterised in that** one of the guiding elements (23) is configured as a separating guide element (26) for holding down the poultry upper arm (19) in an operating region of the separating device (24) in order to separate the wing tip (20) from the poultry lower arm.

4. Apparatus according to any one of claims 1 to 3, **characterised in that** the first hold-down guide (21), the lower arm guide (17), the pre-guiding element (25) and the separating guide element (26) each have an at least substantially L-shaped profile with an upper arm guiding surface (27) for exerting a guide force on the poultry upper arm (19) in the direction of gravity, and a lower arm guiding surface (42) for exerting a guide force on the poultry lower arm perpendicularly to the direction of gravity.

5. Apparatus according to any one of claims 2 to 4, **characterised in that** the pre-guiding element (25) is arranged on a pivot arm (28), wherein the pivot arm (28) is configured so as to be pivotable about a stationary pivot axis (29) running in a first end region (30) above the first hold-down guide (21).

6. Apparatus according to claim 5, **characterised in that** the pivot arm (28) with the pre-guiding element (25) is arranged so as to be pivotable about the stationary pivot axis (29), forming a first pivot joint (31), such that in a waiting position said axis is oriented tilted towards the support guide (15) by a tilt angle α.

7. Apparatus according to claim 6, **characterised in that** to limit the pivot travel of the first pivot joint (31), on the end face pointing towards the first hold-down guide (21), the pre-guiding element (25) has a first counter surface (32) which is configured to limit the tilt angle α to a maximum tilt, and in the waiting position comes into contact with a first end face surface (33) of the first hold-down guide (21) with at least partial positive locking.

8. Apparatus according to any one of claims 5 to 7, **characterised in that** on the inlet side, the separating guide element (26) is arranged on a free end of the pivot arm (28) so as to be pivotable about a pivotable pivot axis (35), forming a second pivot joint (36).

9. Apparatus according to claim 8, **characterised in that** the separating guide element (26) is arranged on the free end (34) of the pivot arm (28) such that in the waiting position, the separating guide element (26) is oriented at least substantially parallel to the support surface (16) of the support guide (15).

10. Apparatus according to one of claims 8 or 9, **characterised in that** on the end face pointing towards a separating guide element (26), the pre-guiding element (25) has a second end face surface (38) which is configured, on reaching a predefined pivot angle β, to come into contact with an inlet-side second counter surface (39) of the separating guide element (26) with at least partial positive locking, such that the separating guide element (26) together with the pre-guiding element (25) forms a common lever arm which is pivotable about the first pivot joint (31), blocking the second pivot joint (36).

11. Arrangement for separating wing tips from poultry carcasses (11) on both sides, comprising two apparatuses (40, 41) for separating wing tips (10) from poultry carcasses (11) according to any of claims 1 to 10, wherein the apparatuses (40, 41) are arranged sequentially behind one another, and one of the apparatuses (40) is configured to separate the right and the respective other of the apparatuses (41) is configured to separate the left wing tip (20).

12. Method for separating wing tips (20) from poultry carcasses (11), comprising the steps:
- conveying of poultry carcasses (11) suspended from the legs along a conveyor line in the transport direction (13) by means of a suspended conveyor device (12);
- guiding the neck and shoulder region by means of a support guide (15) which extends in the transport direction (13) and is arranged below the poultry carcass (11), and has at least one support surface (16) configured to support the neck and shoulder region of the poultry carcass (11);
- guiding the poultry lower arm and wing tip (20) of the poultry carcass (11) by means of a lower arm guide (17) which is arranged at the side of the support guide (15);
- holding down the poultry upper arm (19) under pretension by means of a first hold-down guide (21) which is arranged stationarily;
- holding down the poultry upper arm (19) with a second hold-down guide (22) which is arranged downstream of the first hold-down guide (21) in the transport direction (13) and has at least two guiding elements (23) arranged so as to be movable in deflection against a return force; and
- separating the wing tips (20) by means of a separating device (24) which is arranged along the conveyor line in the region of the second hold-down guide (22).

13. Method according to claim 12, **characterised by** pre-orientation of the poultry upper arm (19) at the inlet to the separating device (24) by means of one of the guiding elements (23) which is configured as a pre-guiding element (25) for holding down the poultry upper arm (19).

14. Method according to one of claims 12 or 13, **characterised by** holding down the poultry upper arm (19) in an operating region of the separating device (24) for separating the wing tip (20) from the poultry lower arm by means of one of the guiding elements (23) which is configured as a separating guide element (26).

15. Method according to any one of claims 12 to 14, **characterised by** the exerting of a guide force on the poultry upper arm (19) in the direction of gravity, and a guide force on the poultry lower arm perpendicularly to the direction of gravity, and in that the lower arm guide (17), the pre-guiding element (25) and the separating guide element (26) each have an at least substantially L-shaped profile with an upper arm guiding surface (27) oriented at least substantially horizontally and a lower arm guiding surface (42) oriented at least substantially perpendicularly thereto.

16. Method according to any one of claims 12 to 15, **characterized by** holding down the poultry upper arm (19) by means of the pre-guiding element (25) by pivoting deflection of the pre-guiding element (25) which is arranged on a pivot arm (28), wherein the pivot arm (28) pivots about a stationary pivot axis (29) running in a first end region (30) above the first hold-down guide (21).

17. Method according to claim 16, **characterised in that** the pivot arm (28) with the pre-guiding element (25) is pivoted about the stationary pivot axis (29), forming a first pivot joint (31), such that, in a waiting position, said axis is oriented tilted towards to the support guide (15) by a tilt angle α.

18. Method according to claim 17, **characterised in that** the pivot travel of the first pivot joint (31) is limited **in that** on the end face pointing towards the first hold-down guide (21), the pre-guiding element (25) has a first counter surface (32) which is configured for limiting the tilt angle α to a maximum tilt and, in the waiting position, comes into contact with a first end face surface (33) of the first hold-down guide (21) with the least partial positive locking.

19. Method according to any one of claims 14 to 18, **characterised by** pivoting of the separating guide element (26) about a pivotable pivot axis (35), forming a second pivot joint (36), in that on the inlet side, the separating guide element (26) is pivotably arranged at a free end (34) of the pivot arm (28).

20. Method according to claim 19, **characterised in that** in the waiting position, the separating guide element (26) is oriented at least substantially parallel to the support surface (16) of the support guide (15).

21. Method according to one of claims 19 or 20, **characterised by** blocking of the second pivot joint (36) on reaching the predefined pivot angle β, such that the separating guide element (26) together with the pre-guiding element (25) forms a common lever arm which is pivotable about the first pivot joint (31).

22. Method for separating the wing tips (20) from poultry carcasses (11) on both sides by twice performing the method for separating the wing tips (20) from poultry carcasses (11) according to any one of claims 12 to 21, wherein the method steps are performed once for separating the right and once for separating the left wing tip (20).

## Revendications

1. Dispositif pour la séparation de l'aileron (10) de carcasses de volaille (11), comprenant :
un appareil d'acheminement suspendu (12) adapté pour acheminer des carcasses de volaille (11) suspendues par les pattes le long d'une section d'acheminement dans une direction de transport (13),
un guide de support (15) adapté pour guider la zone du cou et des épaules, s'étendant dans la direction de transport (13), agencé sous les carcasses de volaille (11), muni d'au moins une surface de support (16) adaptée pour supporter la zone du cou et des épaules des carcasses de volaille (11),
un guide d'avant-bras (17) adapté pour guider l'avant-bras de volaille et l'aileron (20) de la carcasse de volaille (11), agencé latéralement à côté du guide de support (15),
un premier guide de retenue (21) agencé de manière fixe, adapté pour retenir le bras de volaille (19) sous une précontrainte,
un deuxième guide de retenue (22) agencé en aval du premier guide de retenue (21) dans la direction de transport (13), muni d'au moins deux éléments de guidage (23) adaptés pour retenir le bras de volaille (19), les éléments de guidage (23) étant agencés de manière à pouvoir se déplacer en déviation contre une force de rappel, et
un appareil de séparation (24) adapté pour séparer l'aileron (20) et agencé le long de la section d'acheminement dans la zone du deuxième guide de retenue (22).

2. Dispositif selon la revendication 1, **caractérisé en ce qu'**un des éléments de guidage (23) est configuré en tant qu'élément de pré-guidage (25) pour retenir le bras de volaille (19) dans l'arrivée de l'appareil de séparation (24).

3. Dispositif selon l'une quelconque des revendications 1 ou 2, **caractérisé en ce qu'**un des éléments de guidage (23) est configuré en tant qu'un élément de guidage de séparation (26) pour retenir le bras de volaille (19) dans une zone fonctionnelle de l'appareil de séparation (24) pour séparer l'aileron (20) de l'avant-bras de volaille.

4. Dispositif selon l'une quelconque des revendications 1 à 3, **caractérisé en ce que** le premier guide de retenue (21), le guide d'avant-bras (17), l'élément de pré-guidage (25) et l'élément de guidage de séparation (26) sont chacun configurés au moins essentiellement en forme de L, chacun avec une surface de guidage de bras (27) pour exercer une force de guidage sur le bras de volaille (19) dans la direction de la force de pesanteur, ainsi qu'une surface de guidage d'avant-bras (42) pour exercer une force de guidage sur l'avant-bras de volaille perpendiculairement à la direction de la force de pesanteur.

5. Dispositif selon l'une quelconque des revendications 2 à 4, **caractérisé en ce que** l'élément de pré-guidage (25) est agencé sur un bras de pivotement (28), le bras de pivotement (28) étant adapté pour pouvoir pivoter autour d'un axe de pivotement fixe (29) s'étendant dans une première zone d'extrémité (30) au-dessus du premier guide de retenue (21).

6. Dispositif selon la revendication 5, **caractérisé en ce que** le bras de pivotement (28) est agencé avec l'élément de pré-guidage (25) en formant une première articulation de pivotement (31) de manière à pouvoir pivoter autour de l'axe de pivotement fixe (29), de telle sorte que celui-ci est orienté incliné d'un angle d'inclinaison α par rapport au guide de support (15) dans une position d'attente.

7. Dispositif selon la revendication 6, **caractérisé en ce que** pour limiter la course de pivotement de la première articulation de pivotement (31), l'élément de pré-guidage (25) comprend une première surface de contre-appui (32) côté frontal vers le premier guide de retenue (21), qui est adaptée pour limiter l'angle d'inclinaison α à une inclinaison maximale et vient en appui avec une première surface frontale d'extrémité (33) du premier guide de retenue (21) dans la position d'attente avec une complémentarité de forme au moins partielle.

8. Dispositif selon l'une quelconque des revendications 5 à 7, **caractérisé en ce que** l'élément de guidage de séparation (26) est agencé côté entrée à une extrémité libre du bras de pivotement (28) de manière à pouvoir pivoter autour d'un axe de pivotement pivotant (35) en formant une deuxième articulation de pivotement (36).

9. Dispositif selon la revendication 8, **caractérisé en ce que** l'élément de guidage de séparation (26) est agencé à l'extrémité libre (34) du bras de pivotement (28), de telle sorte que l'élément de guidage de séparation (26) est orienté, dans la position d'attente, au moins essentiellement parallèlement à la surface de support (16) du guide de support (15).

10. Dispositif selon l'une quelconque des revendications 8 ou 9, **caractérisé en ce que** l'élément de pré-guidage (25) comprend une deuxième surface frontale d'extrémité (38) côté frontal vers l'élément de guidage de séparation (26), qui est adaptée, lorsqu'un angle de pivotement prédéterminé β est atteint, pour venir en appui avec une deuxième surface de contre-appui côté entrée (39) de l'élément de guidage de séparation (26) avec une complémentarité de forme au moins partielle, de telle sorte que l'élément de guidage de séparation (26) forme, avec l'élément de pré-guidage (25), un bras de levier pouvant pivoter conjointement autour de la première articulation de pivotement (31) en bloquant la deuxième articulation de pivotement (36).

11. Agencement pour la séparation des deux côtés de l'aileron de carcasses de volaille (11), comprenant deux dispositifs (40, 41) pour la séparation des ailerons (10) de carcasses de volaille (11) selon l'une quelconque des revendications 1 à 10, dans lequel les dispositifs (40, 41) sont agencés séquentiellement l'un après l'autre et un des dispositifs (40) est configuré pour la séparation de l'aileron droit et l'autre des dispositifs (41) pour la séparation de l'aileron gauche (20).

12. Procédé pour la séparation de l'aileron (20) de carcasses de volaille (11), comprenant les étapes suivantes :
- l'acheminement de carcasses de volaille (11) suspendues par les pattes le long d'une section d'acheminement dans une direction de transport (13) au moyen d'un appareil d'acheminement suspendu (12),
- le guidage de la zone du cou et des épaules au moyen d'un guide de support (15) s'étendant dans la direction de transport (13), agencé sous les carcasses de volaille (11), muni d'au moins une surface de support (16) adaptée pour supporter la zone du cou et des épaules des carcasses de volaille (11),
- le guidage de l'avant-bras de volaille et de l'aileron (20) de la carcasse de volaille (11) au moyen d'un guide d'avant-bras (17), agencé latéralement à côté du guide de support (15),
- la retenue du bras de volaille (19) sous une précontrainte au moyen d'un premier guide de retenue (21) agencé de manière fixe,
- la retenue du bras de volaille (19) avec un deuxième guide de retenue (22) agencé en aval du premier guide de retenue (21) dans la direction de transport (13), muni d'au moins deux éléments de guidage (23), qui sont agencés de manière à pouvoir se déplacer en déviation contre une force de rappel, et
- la séparation de l'aileron (20) au moyen d'un appareil de séparation (24) agencé le long de la section d'acheminement dans la zone du deuxième guide de retenue (22).

13. Procédé selon la revendication 12, **caractérisé par** la pré-orientation du bras de volaille (19) dans l'arrivée de l'appareil de séparation (24) au moyen d'un des éléments de guidage (23), qui est configuré en tant qu'élément de pré-guidage (25) pour retenir le bras de volaille (19).

14. Procédé selon l'une quelconque des revendications 12 ou 13, **caractérisé par** la retenue du bras de volaille (19) dans une zone fonctionnelle de l'appareil de séparation (24) pour séparer l'aileron (20) de l'avant-bras de volaille au moyen d'un des éléments de guidage (23), qui est configuré en tant qu'élément de guidage de séparation (26).

15. Procédé selon l'une quelconque des revendications 12 à 14, **caractérisé par** l'exercice d'une force de guidage sur le bras de volaille (19) dans la direction de la force de pesanteur, ainsi que d'une force de guidage sur l'avant-bras de volaille perpendiculairement à la direction de la force de pesanteur, de telle sorte que le guide d'avant-bras (17), l'élément de pré-guidage (25) et l'élément de guidage de séparation (26) sont chacun configurés au moins essentiellement en forme de L, avec une surface de guidage de bras (27) orientée au moins essentiellement horizontalement, et une surface de guidage d'avant-bras (42) orientée au moins essentiellement perpendiculairement à celle-ci.

16. Procédé selon l'une quelconque des revendications 12 à 15, **caractérisé par** la retenue du bras de volaille (19) au moyen de l'élément de pré-guidage (25) par déviation pivotante de l'élément de pré-guidage (25), qui est agencé sur un bras de pivotement (28), le bras de pivotement (28) étant amené à pivoter autour d'un axe de pivotement fixe (29) s'étendant dans une première zone d'extrémité (30) au-dessus du premier guide de retenue (21).

17. Procédé selon la revendication 16, **caractérisé en ce que** le bras de pivotement (28) pivote autour de l'axe de pivotement fixe (29) avec l'élément de pré-guidage (25) en formant une première articulation de pivotement (31), de telle sorte que ceux-ci sont orientés inclinés d'un angle d'inclinaison α par rapport au guide de support (15) dans une position d'attente.

18. Procédé selon la revendication 17, **caractérisé en ce que** la course de pivotement de la première articulation de pivotement (31) est limitée par le fait que l'élément de pré-guidage (25) comprend une première surface de contre-appui (32) côté frontal vers le premier guide de retenue (21), qui est adaptée pour limiter l'angle d'inclinaison α à une inclinaison maximale et vient en appui avec une première surface frontale d'extrémité (33) du premier guide de retenue (21) dans la position d'attente avec une complémentarité de forme au moins partielle.

19. Procédé selon l'une quelconque des revendications 14 à 18, **caractérisé par** le pivotement de l'élément de guidage de séparation (26) autour d'un axe de pivotement pivotant (35) avec formation d'une deuxième articulation de pivotement (36), par le fait que l'élément de guidage de séparation (26) est agencé côté entrée à une extrémité libre (34) du bras de pivotement (28) de manière à pouvoir pivoter.

20. Procédé selon la revendication 19, **caractérisé en ce que** l'élément de guidage de séparation (26) est orienté, dans la position d'attente, au moins essentiellement parallèlement à la surface de support (16) du guide de support (15).

21. Procédé selon l'une quelconque des revendications 19 ou 20, **caractérisé par** le blocage de la deuxième articulation de pivotement (36) lorsque l'angle de pivotement prédéterminé β est atteint, de telle sorte que l'élément de guidage de séparation (26) forme, avec l'élément de pré-guidage (25), un bras de levier pouvant pivoter conjointement autour de la première articulation de pivotement (31).

22. Procédé pour séparer des deux côtés l'aileron (20) de carcasses de volaille (11) par réalisation à deux reprises du procédé pour séparer l'aileron (20) de carcasses de volaille (11) selon l'une quelconque des revendications 12 à 21, les étapes de procédé étant réalisées à chaque fois pour séparer l'aileron droit et pour séparer l'aileron gauche (20).
